# EUROPEAN PATENT APPLICATION

(11) **EP 2 107 633 A1**
(43) Date of publication of application: **07.10.2009**
(21) Application number: 08703761.0
(22) Date of filing: 17.01.2008
(51) Int. Cl.: H01M 10/50, B60K 6/28, B60K 11/06, B60L 3/00, B60L 11/14

(54) **BATTERY COOLING DEVICE, BATTERY ATTACHED WITH COOLING DEVICE, AND VEHICLE**

(30) Priority: 24.01.2007 JP 2007014043
(71) Applicant: Toyota Jidosha Kabushiki Kaisha, Toyota-shi, Aichi 471-8571 (JP)
(72) Inventor: KIMURA, Kenji, Toyota-shi Aichi 471-8571 (JP)
(74) Representative: TBK-Patent
(86) International application number: PCT/JP2008/050932
(87) International publication number: WO 2008/090939

(57) **Abstract**

Provided are a battery cooling device utilizing intake air or exhaust gas of an engine, a battery having a cooling device attached to it, and a vehicle mounted with the battery cooling device and an engine. The battery cooling device (210) has a battery housing chamber (220) capable of housing a battery (50) and filled with refrigerant (NH), a turbine (240) to be rotated by exhaust gas (EG) of the engine (10), and a refrigerant flow part (230) including a compressor (250), a heat exchanger (260), a pipe (271, 272, 273), etc.

## Description

### Technical Field

The present invention relates to a battery cooling device for cooling a battery by utilizing intake air or exhaust gas of an engine, a battery attached with cooling device including such battery cooling device, and a vehicle mounted with the battery cooling device, the battery, and the engine.

### Background Art

In recent years, various batteries have been proposed as a power source of a portable device, a mobile phone, etc. or a power source of an electric vehicle, a hybrid car, etc. Of such batteries, a battery mounted in a vehicle tends to generate a large amount of heat and thus needs a cooling device in many cases. As this cooling device, a cooling device configured to cool a battery by utilizing intake air of an engine has been proposed (see Patent Literature 1).
Patent Literature 1: JP2006-76496A

A vehicle disclosed in this Patent Literature 1 is a hybrid two-wheel vehicle which is driven by a combination of an engine and a motor. This vehicle is provided with an intake passage for introducing outside air as intake air to the engine and a secondary battery (a battery) serving as a power source of the motor. This secondary battery is placed between an outside-air inlet hole of the intake passage and an air cleaner. Intake air flowing through the intake passage will pass through the secondary battery to cool it, and then the intake air will be supplied into the engine through the air cleaner. This prevents a temperature rise of the secondary battery to suppress deterioration of battery characteristics.

In the vehicle of this Patent Literature 1, the secondary battery is placed inside the intake passage and therefore a simple structure can be provided advantageously.

### Summary of Invention

### Technical Problem

However, if the inner pressure of a battery increases for some reasons and the battery explodes, gas releasing from the battery, and broken pieces of components of the battery, etc. will reach the engine together with intake air, thus causing defects of the engine and others.

The present invention has been made to solve the above problems and has a purpose to provide a battery cooling device arranged to cool a battery by utilizing intake air or exhaust gas of an engine but cause no damage to the engine even when defects such as battery explosion occur. The present invention also has another purpose to provide a battery attached with cooling device including such battery cooling device, and a vehicle mounted with such battery cooling device, the battery, and the engine.

### Solution to Problem

To achieve the above purpose, a battery cooling device, comprising: a fluid different from intake air and exhaust gas of an engine, the fluid being to come into direct or indirect contact with a battery; and fluid flowing means for flowing the fluid by using the intake air or exhaust gas of the engine as a power source.

The battery cooling device of the invention is arranged such that the fluid flowing means causes a fluid different from intake air and exhaust gas of the engine to flow to thereby come into direct or indirect contact with the battery. Even when the battery generates a large amount of heat, this battery can be cooled by the fluid. Furthermore, the intake air or exhaust gas of the engine is utilized as the power source of the fluid flowing means. Accordingly, no additional energy needs to be prepared to flow the fluid.

A technique of using intake air or exhaust gas as the power source, for example may include a technique in which a liquid is used as the fluid, outside air is introduced into the liquid by utilizing negative pressure generated by the intake air of the engine, thus generating bubbles, and the liquid is flowed in association with upward movement of the bubbles. Alternatively, it may include another technique in which a refrigerant is used as the fluid, a turbine is rotated by a flow of the intake air or exhaust gas of the engine, and the refrigerant is allowed to flow by a pump by utilization of rotation of this turbine. Furthermore, it may include another technique in which outside air is used as the fluid, the turbine is rotated by a flow of the intake air or exhaust gas of the engine, and the outside air is flowed by a fan by utilization of rotation of this turbine.

The fluid may include liquids such as insulation oil, pure water; and antifreeze solution, refrigerants such as ammonia, isobutane, and HFC; and air, for example. Furthermore, the fluid preferably has an insulation property.

In the aforementioned battery cooling device, furthermore, preferably, the fluid is a liquid, the cooling device comprises a battery housing chamber housing the battery, the battery housing chamber being filled with the liquid, the fluid flowing means comprises: a bubble rising pipe extending in a vertical direction and containing the liquid, the bubble rising pipe having an upper end to be communicated with an intake pipe through which the intake air of the engine will flow and a bubble inlet hole for introducing outside air to generate bubbles in the contained liquid; and an outside-air inlet pipe communicated with the bubble rising pipe and configured to introduce outside air into the bubble inlet hole by negative pressure of the intake pipe through the bubble rising pipe, the bubble rising pipe is communicated with the battery housing chamber through a first flow hole and a second flow hole, the first flow hole being located above the bubble inlet hole in the vertical direction and being configured to allow the liquid to flow at least from the battery housing chamber toward the bubble rising pipe, and the second flow hole being located above the first flow hole in the vertical direction and being configured to allow the fluid to flow at least from the bubble rising pipe toward the battery housing chamber, the fluid flowing means is arranged to flow the liquid from the battery housing chamber toward the bubble rising pipe through the first flow hole and flow the liquid from the bubble rising pipe toward the battery housing chamber through the second flow hole by a liquid flow to be induced in the liquid when bubbles introduced in the bubble rising pipe through the bubble inlet hole by the negative pressure of the intake pipe move upward in the bubble rising pipe.

In the battery cooling device of the present invention, the bubbles introduced in the bubble rising pipe through the bubble inlet hole by the negative pressure of the intake pipe will move upward, thereby inducing a liquid flow in the liquid. This liquid flow makes the liquid to flow from the battery housing chamber toward the bubble rising pipe through the first flow hole and simultaneously the liquid to flow from the bubble rising pipe toward the battery housing chamber through the second flow hole.

Accordingly, from the point of view of the battery housing chamber, when the pressure of the intake pipe is made negative by the intake air of the engine, the liquid flows out through the first flow hole while the liquid flows in the battery housing chamber through the second flow hole located above the first flow hole in the vertical direction. Thus, a liquid flow is also induced in the battery housing chamber. This makes it possible to cool the battery arranged in the battery housing chamber even when the battery generate heat due to charge or discharge or other reasons. In the case where a plurality of batteries is housed in the battery housing chamber, particularly, each battery can be cooled equally.

In the battery cooling device of the present invention, the battery(s) is housed in the battery housing chamber filled with the liquid. Even when the battery(s) explodes in the battery housing chamber by a pressure increase of the battery(s), for example, the gas releasing from the battery(s), broken pieces of components of the battery(s), and others are less likely to reach the engine along with the intake air. It is therefore possible to reliably avoid defects such as troubles and damages of the engine resulting from the above.

Furthermore, the fluid flowing means is arranged to cause the bubbles introduced in the bubble rising pipe through the bubble inlet hole by the negative pressure of the intake pipe to move upward in the liquid in the bubble rising pipe, thereby inducing the liquid flow in this liquid. Accordingly, during upward movement of the bubbles in the liquid in the bubble rising pipe, the bubbles and the liquid can exchange heat with each other.

Consequently, the liquid can be cooled by the outside air.

In the battery cooling device described in claim 1, preferably, the fluid is a refrigerant, the fluid flowing means comprises: a turbine to be rotated by a flow of the intake air or the exhaust gas of the engine; and a pump for pressure feeding the refrigerant by rotation of the turbine; the battery cooling device comprises: a battery housing chamber capable of housing the battery, the battery housing chamber being filled with the refrigerant; a heat exchanger for cooling the refrigerant; and a pipe connecting between the battery housing chamber and the heat exchanger, between the heat exchanger and the pump, and between the pump and the battery housing chamber, the pipe being arranged to form a circulation passage for circulating the refrigerant between the battery housing chamber, the heat exchanger, and the pump.

The battery cooling device of the present invention uses the refrigerant as the fluid and includes the battery housing chamber that can house a battery(s) and is filled with the refrigerant. In this battery cooling device, the fluid flowing means comprise the turbine which will be rotated by the flow of the intake air or exhaust gas of the engine, the pump for pressure feeding the refrigerant by the rotation of this turbine, and the heat exchanger for cooling the refrigerant.

In the battery cooling device of the present invention, during the operation of the engine, the refrigerant is caused by pressure feeding by the pump by rotation of the turbine to circulate through the circulation passage formed by connecting the battery housing chamber, the heat exchanger, and the pump. Even when the battery(s) housed in the battery housing chamber generates heat due to charge or discharge or other reasons, the refrigerant flowing in the battery housing chamber comes into direct contact with the battery(s) during this time and can cool the battery(s).

The battery(s) is housed in the battery housing chamber filled with the refrigerant. Accordingly, even when the battery(s) explodes in the battery housing chamber by a pressure increase of the battery(s), for example, the gas releasing from the battery(s), broken pieces of components of the battery(s), and others are less likely to reach the engine along with the intake air. It is therefore possible to reliably avoid defects such as troubles and damages of the engine resulting from the above.

Alternatively, even when such explosion of the battery(s) occurs, the gas releasing from the battery(s), broken pieces of components of the battery(s), and others are less likely to reach the exhaust device and others along with the intake air. It is therefore possible to reliably avoid defects such as troubles and damages of the exhaust device and the exhaust gas cleaning device resulting from the above.

Furthermore, in the aforementioned battery cooling device, preferably, the fluid is a liquid, and the battery housing chamber has a gas vent valve for discharging gas releasing from the battery to the outside.

In the battery cooling device of the present invention, even in the case where the battery(s) explodes in the battery housing chamber by a pressure increase of the battery(s), the gas releasing from the battery(s) can be discharged by the gas vent valve through the liquid filled in the battery housing chamber. This makes it possible to prevent the occurrence of defects of the pump and the heat exchanger resulting from the pressure increase in the circulation passage due to the gas release and breakage of the battery housing chamber and the pipe.

In the battery cooling device described in claim 1, preferably, the fluid is outside air, and the fluid flowing means includes: a turbine to be rotated by a flow of the intake air or the exhaust gas of the engine; and a fan which is operated by rotation of the turbine to blow the outside air to cool the battery.

The battery cooling device of the present invention uses the outside air as the fluid. The fluid flowing means includes the turbine which will be rotated by a flow of the intake air or exhaust gas of the engine and the fan for cooling the battery by blowing outside air by rotation of this turbine.

In this battery cooling device, even when the battery generates a large amount of heat, the battery can be cooled by being directly exposed to the outside air blown by the fan by the rotation of the turbine.

Furthermore, it is preferable to provide a battery attached with cooling device comprising: the battery; and the battery cooling device set forth in one of claims 1 to 5.

The battery attached with cooling device of the invention comprises one of the above battery cooling devices in addition to the battery(s). Even when the battery(s) generates a large amount of heat due to charge or discharge or other reasons, the battery cooling device can cool the battery to restrain a temperature rise.

In this battery attached with cooling device, additionally, the fluid different from the intake air and the exhaust gas of the engine is caused to flow by the fluid flowing means using the intake air or exhaust gas of the engine as a power source. Accordingly, the battery(s) can be configured as an energy-saving type battery needing no additional energy to cause the fluid to flow.

Furthermore, it is preferable to provide a vehicle comprises: an engine; the battery; and the battery cooling device set forth in one of claims 1 to 5.

The vehicle of the invention comprises one of the above battery cooling devices in addition to the engine and the battery(s). Accordingly, the battery(s) can be cooled easily by operation of the engine.

Consequently, this vehicle can be achieved as a vehicle mounted with the battery(s) having excellent battery characteristics while efficiently using energy resulting from the engine operation.

### Brief Description of Drawings

FIG. 1 is a perspective view of a vehicle in a first embodiment;
FIG. 2 is a perspective view of a battery constituting a battery attached with cooling device mounted in the vehicle in the first embodiment;
FIG. 3 is a perspective view of the battery attached with cooling device in the first embodiment;
FIG. 4 is an explanatory view to show a state of cooling oil in the battery attached with cooling device in the first embodiment during non-operation of the engine, corresponding to a cross sectional view along a line A-A in FIG. 3;
FIG. 5 is an explanatory view to show a state of the cooling oil in which a liquid flow occurs in a battery housing chamber in the battery attached with cooling device in the first embodiment, corresponding to a cross sectional view along the line A-A in FIG. 3;
FIG. 6 is a perspective view of a vehicle in second and third embodiments and a first modified example;
FIG. 7 is an explanatory view to show a battery attached with cooling device in the second embodiment;
FIG. 8 is an explanatory view to show a battery attached with cooling device in the first modified example; and
FIG. 9 is an explanatory view to show a battery attached with cooling device in the third embodiment.

### Explanation of Reference Signs

- 1, 21, 31, 41: Vehicle
- 10: Engine
- 11: Intake pipe
- 50: Battery
- 100, 200, 300, 400: Battery with cooling device
- 110, 210, 310, 410: Battery cooling device (Cooling device of Battery)
- 120, 220, 320: Battery housing chamber
- OL: Cooling oil (Liquid)
- 130: Cooling oil flowing part (Fluid flowing means)
- ARu: Outside air
- ARi: Vehicle interior air
- IG: Intake air
- VG: Bubbles
- UF: Liquid rising flow
- 140: Bubble rising pipe
- 141H: First flow hole
- 142H: Second flow hole
- 143: Upper end
- 144H: Bubble inlet hole
- 150: Outside-air inlet pipe
- NH: Ammonia (Refrigerant)
- EG: Exhaust gas
- 230: Refrigerant flowing part (Fluid flowing means)
- 240: Turbine
- 250: Compressor (Pump)
- 260: Heat exchanger
- 270R, 370R: Circulation passage
- 271, 272, 273, 371, 372, 373: Pipe
- CL: Antifreeze solution (Liquid)
- 325: Gas vent valve
- 330: Antifreeze solution flowing part (Fluid flowing means)
- 350: Pump
- 360: Heat exchanger
- 430: Outside air flowing part (Fluid flowing means)
- AR: Outside air
- 450: Fan

### Description of Embodiments

A detailed description of first to third preferred embodiments and a first modified example of the invention will now be given referring to the accompanying drawings.

### (First Embodiment)

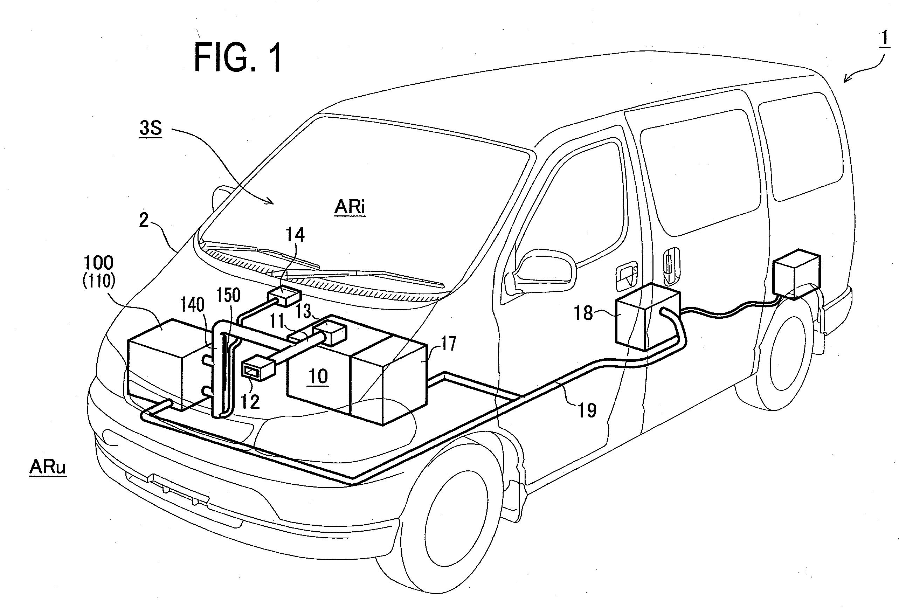

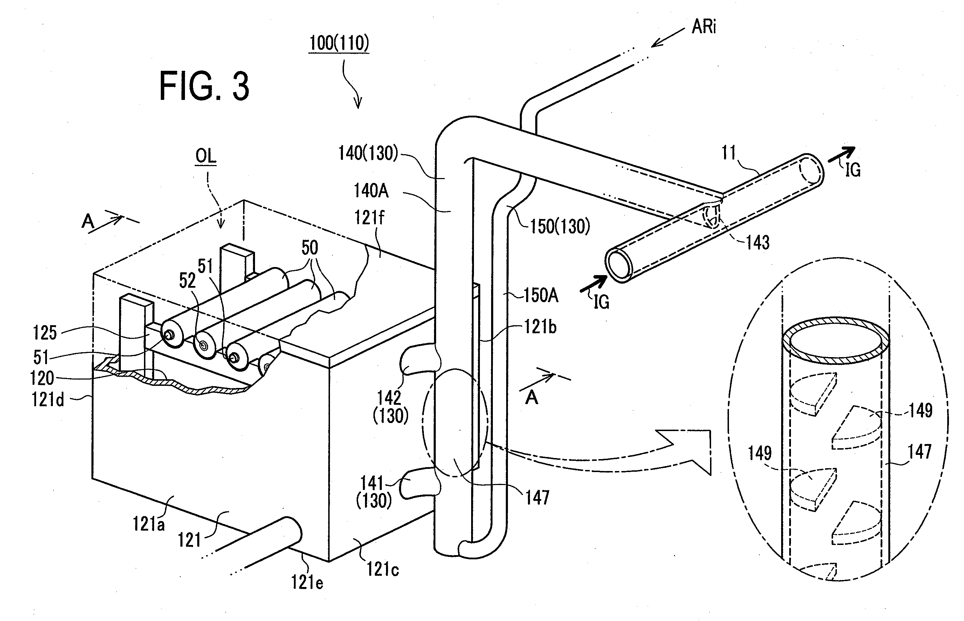

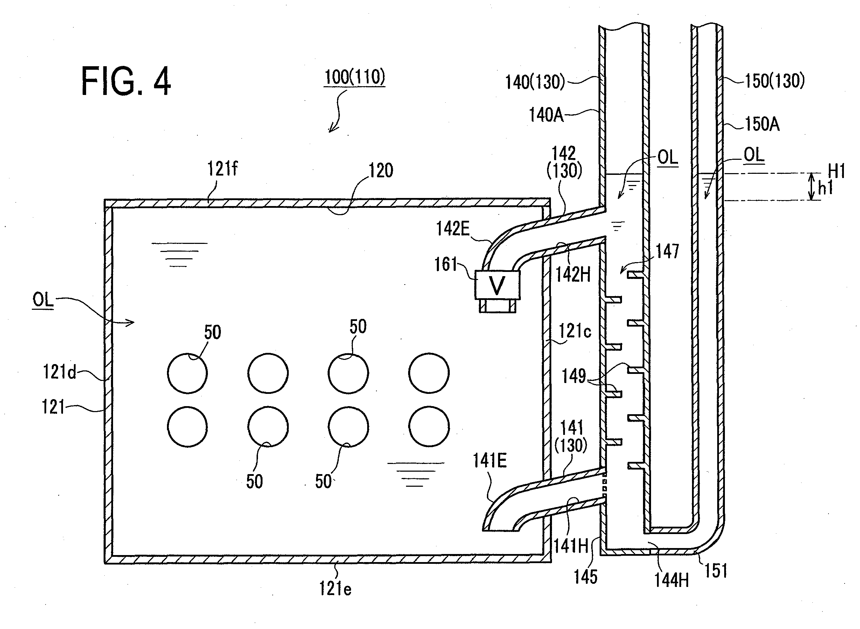

A vehicle 1 in the first embodiment is a hybrid car which is driven by a combination of an engine 10, a front motor 17, and a rear motor 18 as shown in FIG. 1. This vehicle 1 includes a vehicle body 2, the engine 10, the front motor 17 attached to this engine 10, the rear motor 18, a cable 19, and a battery attached with cooling device 100. This battery attached with cooling device 100 is mounted in the vehicle body 2 of the vehicle 1 and is connected to the front motor 17 and the rear motor 18 through the cable 19. This battery attached with cooling device 100 is constituted of a battery cooling device 110 (a cooling device of battery) which will be mentioned later and a plurality of batteries 50 (only eight batteries are illustrated in FIG. 4) housed in a battery housing chamber 120 formed by a battery housing case 121 as shown in FIG. 3.

This vehicle 1 is arranged to run by the engine 10, the front motor 17 and the rear motor 18 by a publicly known technique. The vehicle 1 uses the battery attached with cooling device 100 as a power source to drive the front motor 17 and the rear motor 18. This vehicle 1 is configured to take in outside air ARu through an outside-air inlet hole 12 and supply the air as intake air IG (fee FIG. 3) into the engine 10 through an intake pipe 11 and an air cleaner 13.

The battery 50 of the battery attached with cooling device 100 will be explained.

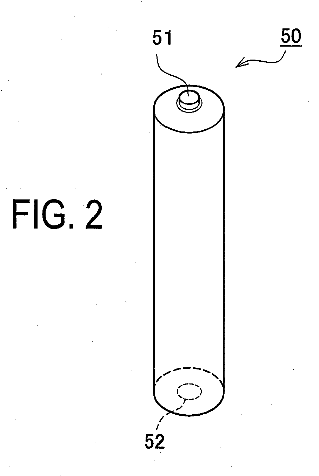

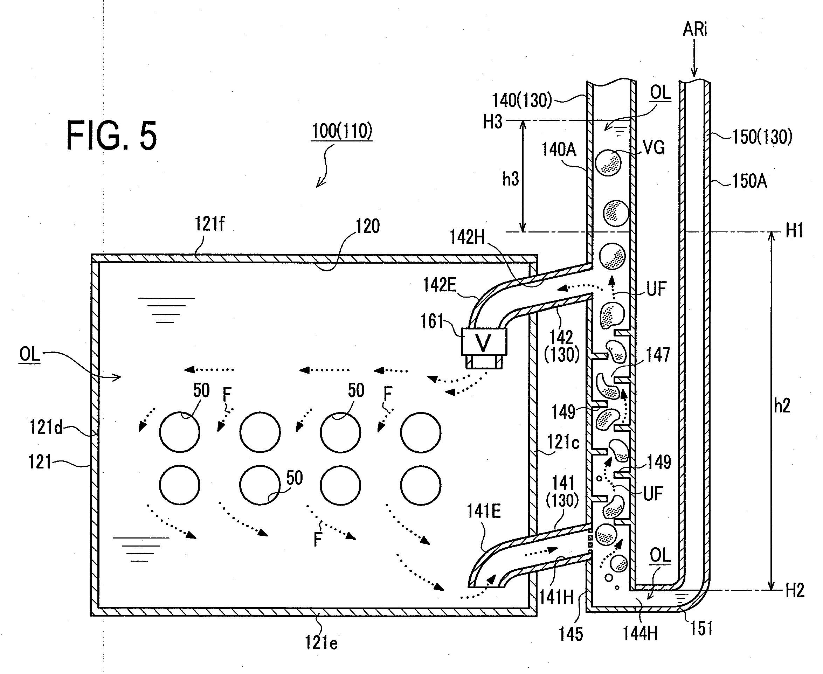

This battery 50 is a cylindrical cell having a nearly columnar shape shown in FIG. 2, which is a well known lithium ion secondary battery. This battery 50 has an outer positive terminal 51 at one side in an axial direction and an outer negative terminal 52 at the other side. The battery attached with cooling device 100 includes the plurality of batteries 50 (only eight batteries are illustrated in FIGs. 4 and 5) in the battery housing chamber 120. These batteries 50 are held with use of a battery holding member 125 shown in FIG. 3 in the battery housing chamber 120 so that the batteries 50 are arranged in a plurality of parallel rows (only two rows are illustrated in FIG. 4), each comprising more than one battery (only four batteries are illustrated in FIG. 4). The outer positive terminals 51 and the outer negative terminals 52 of the adjacent batteries 50 are electrically connected in series to each other by a bus bar (not shown) (see FIGs. 3 to 5). In FIGs. 4 and 5, the battery holding member 125 is not illustrated.

The battery cooling device 110 of the battery attached with the cooling device 100 is explained below.

This battery cooling device 110 includes insulating cooling oil OL in a liquid state, the battery housing container 121 forming the battery housing chamber 120, and a cooling oil flowing part 130 constituted of a bubble rising pipe 140, a first flow pipe 141, a second flow pipe 142, an outside-air inlet pipe 150, and others.

The battery housing container 121 has a nearly rectangular parallelepiped outer shape as shown in FIG. 3, which has a rectangular plate shaped bottom wall 121e and four side walls, i.e., a first side wall 121a, a second side wall 121b, a third side wall 121c, and a fourth side wall 121d which extend from four sides of the bottom wall 121e in a direction perpendicular to the bottom wall 121e. Of them, the first and second side walls 121a and 121b are the largest side walls, which are the same in shape and arranged in parallel to each other as shown in FIG. 3. Furthermore, the third and fourth side walls 121c and 121d are arranged in parallel to each other between the first and second side walls 121a and 121b. This battery housing container 121 has an opening on an insertion side (an upper side in FIG. 3), which is liquid-tightly closed by a cover wall 121f. The battery housing chamber 120 is an internal space surrounded by the first to fourth side walls 121a to 121d, the bottom wall 121e, and the cover wall 121f to house the plurality of batteries 50. This battery housing chamber 120 is filled with the cooling oil OL.

Of the cooling oil flowing part 130, the outside-air inlet pipe 150 is a pipe for introducing vehicle interior air ARi of a vehicle interior 3S of the vehicle 1 to a bubble inlet hole 144H by negative pressure in the intake pipe 11 through the bubble rising pipe 140 mentioned later during operation of the engine 10. This vehicle interior air ARi is introduced into the outside-air inlet pipe 150 through a vehicle interior air inlet hole 14 communicated with the outside-air inlet pipe 150 and placed in the vehicle interior 3S. This outside-air inlet pipe 150 has a vertical part 150A extending on a side along the third side wall 121c of the battery housing container 121 and in a vertical direction from a position (a position in a vertical direction in FIG. 3) on almost the same level as the bottom wall 121e of the battery housing container 121 to a position above the cover wall 121f as shown in FIGs. 1, 3 and 4.

Of the cooling oil flowing part 130, the bubble rising pipe 140 has a vertical part 140A extending in a vertical direction from a position (a position in a vertical direction FIG. 4) on almost the same level as the bottom wall 121e of the battery housing container 121 to a position above the cover wall 121f as shown in FIG. 4. This vertical part 140A is arranged on a side along the third side wall 121c of the battery housing container 121 so as to be parallel to the third side wall 121c as with the vertical part 150A of the outside-air inlet pipe 150. The cooling oil OL is contained in the vertical part 140A. This bubble rising pipe 140 has an upper end 143 located on an upper side in a vertical direction of the pipe 140 and continuous to the vertical part 140A, the upper end 143 being connected to the intake pipe 11 in which intake air IG of the engine 10 will flow.

This bubble rising pipe 140 and the outside-air inlet pipe 150 are communicated with each other through a lower portion 145 located lower in the vertical direction of the vertical part 140A and a lower portion 151 located lower in the vertical direction of the outside-air inlet pipe 150 which are connected to each other as shown in FIGs. 4 and 5. In this lower portion 145, a hole communicating with the outside-air inlet pipe 150 is the bubble inlet hole 144H. This bubble inlet hole 144H serves to introduce the vehicle interior air ARi introduced into the cooling oil OL contained in the vertical part 140A through the outside-air inlet pipe 150, thereby generating bubbles VG.

The bubble rising pipe 140 is connected to the first flow pipe 141 in a position above the bubble inlet hole 144H of the vertical part 140A in the vertical direction as shown in FIGs. 1, 3, and 4 so as to communicate with the battery housing chamber 120 of the battery housing container 121. This first flow pipe 141 is designed so that an end 141E located in the battery housing chamber 120 faces down in the vertical direction so as to prevent bubbles VG from entering the battery housing chamber 120. The first flow hole 141H in this first flow pipe 141 is designed to allow the cooling oil OL to flow from the battery housing chamber 120 toward the bubble rising pipe 140.

This bubble rising pipe 140 is connected to the second flow pipe 142 in a position above the first flow hole 141H of the vertical part 140A in the vertical direction as shown in FIGs. 1, 3, and 4, thereby communicating to the battery housing chamber 120. This second flow pipe 142 is also designed so that an end 142E located in the battery housing chamber 120 faces down in the vertical direction so as to prevent bubbles VG from entering the battery housing chamber 120. This end 142E is provided with a non-return valve 161 that allows the cooling oil OL to flow only in a direction from the bubble rising pipe 140 toward the battery housing chamber 120. Therefore, the second flow hole 142H of the second flow pipe 142 allows the cooling oil OL to flow from the bubble rising pipe 140 toward the battery housing chamber 120 of the battery housing container 121.

In the first embodiment, of the vertical part 140A, a protrusion arrangement section 147 located between the first flow pipe 141 and the second flow pipe 142 includes a plurality of protrusions 149 having a semi-circular disk shape shown in FIGs. 3 and 4 arranged in the bubble rising pipe 140. Those protrusions 149 protrude in a diameter direction of the bubble rising pipe 140 so that they are arranged in zigzag pattern in the vertical direction.

In this battery cooling device 110, as shown in FIGs. 4 and 5, the cooling oil OL is constantly filled up in the battery housing chamber 120 of the battery housing container 121, while a predetermined amount of cooling oil OL is also contained in the vertical part 140A of the bubble rising pipe 140 and the vertical part 150A of the outside-air inlet pipe 150.

Specifically, during non-operation of the engine 10, the inside of the vertical parts 140A and 150A is under atmospheric pressure and thus the cooling oil OL is contained in the vertical parts 140A and 150A on the same liquid level. Furthermore, a nonoperation-time oil level H1 of the cooling oil OL contained in the vertical parts 140A and 150A is determined to be higher by h1 (h1 ≥ 0) (see FIG. 4) than the height of the cover wall 121f of the battery housing container 121 of the battery housing chamber 120 in which the cooling oil OL is filled.

Here, when the engine 10 is operated, the intake air IG is supplied to the engine 10 through the intake pipe 11 and the air cleaner 13, generating negative pressure in the intake pipe 11 (see FIG. 1). Accordingly, the inner pressure of the bubble rising pipe 140 communicating with the intake pipe 11 also becomes negative. On the other hand, the inner pressure of the outside inlet pipe 150 communicating with the vehicle interior 3S remains atmospheric pressure.

Therefore, during operation of the engine 10, a pressure difference corresponding to a magnitude of the pressure (intake pressure) generated when the intake air IG is sucked in the engine 10 occurs between the inside of the bubble rising pipe 140 and the inside of the outside-air inlet pipe 150. Thus, the liquid level of the cooling oil OL in the outside-air inlet pipe 150 decreases by an oil level difference h2 (h2 >0) to an operation-time oil level H2 lower than the nonoperation-time oil level H1 (see FIG. 5). On the other hand, the liquid level of the cooling oil OL in the bubble rising pipe 140 increases by an oil level difference h3 (h3>0) to an operation-time oil level H3 higher than the nonoperation-time oil level H1. In the case where large negative pressure is generated in the intake pipe 11 and this operation-time oil level H2 is positioned below an upper edge of the battery inlet hole 144H of the bubble rising pipe 140, the vehicle interior air ARi will be introduced into the bubble rising pipe 140 through the outside-air inlet pipe 150 and the battery inlet hole 144H. That is, bubbles VG occur in the bubble rising pipe 140.

These bubbles VG will rise in the cooling oil OL in the bubble rising pipe 140. In the protrusion arrangement section 147, the bubbles VG will move upward by avoiding the protrusions 149. As the bubbles VG move upward, a liquid rising flow UF of the cooling oil OL in a rising direction is generated in the bubble rising pipe 140 (see FIG. 5). In association with generation of this liquid rising flow UF, the cooling oil OL is caused to flow from the battery housing chamber 120 into the bubble rising pipe 140 through the first flow hole 141H. Furthermore, the cooling oil OL is caused to flow from the bubble rising pipe 140 toward the battery housing chamber 120 through the second flow hole 142H and the non-return valve 161.

The bubbles VG (outside air) releasing from the cooling oil OL flows in the engine 10 through the intake pipe 11 and the air cleaner 13.

Accordingly, from the point of view of the battery housing chamber 120, when negative pressure is generated in the intake pipe 11 by the intake air of the engine 10, the cooling oil OL flows out from the battery housing chamber 120 through the first flow hole 141H, while the cooling oil OL flows in from the bubble rising pipe 140 through the second flow hole 142H located above the first flow hole 141H in the vertical direction. Thus, liquid flows F are also generated in the battery housing chamber 120. In the cooling oil flowing part 130, therefore, the cooling oil OL can be circulated between the battery housing chamber 120 and the bubble rising pipe 140.

Meanwhile, during rising of the bubbles VG in the cooling oil OL in the bubble rising pipe 140, the bubbles VG and the cooling oil OL can be heat exchanged with each other. Consequently, when the vehicle interior air ARi of lower temperature than the cooling oil OL is introduced as the bubbles VG, the cooling oil OL can be cooled.

In other words, in this battery cooling device 110, the negative pressure of the intake pipe 11 generated by the intake air of the engine 10 is utilized as a means for generating the liquid flows F in the cooling oil OL, thereby generating the liquid flows F in the cooling oil OL. In addition, the introduced vehicle interior air ARi (bubbles VG) can cool the cooling oil OL. Thus, the batteries 50 in the battery housing chamber 120 can be cooled. To flow the cooling oil OL and cool it, furthermore, there is no need to provide an additional energy source such as a power source.

In the first embodiment, particularly, the protrusions 149 are arranged in zigzag pattern in the protrusion arrangement section 147 of the vertical part 140A. Accordingly, the bubbles VG will pass through the cooling oil OL inside the protrusion arrangement section 147 by avoiding the protrusions 149, and hence the bubbles VG in the protrusion arrangement section 147 will touch the cooling oil OL for a long time. This makes it possible to perform sufficient heat exchange between the bubbles VG and the cooling oil OL, thereby efficiently cooling the batteries 50.

In the battery attached with cooling device 100 in the first embodiment, the battery cooling device 110 is provided in addition to the batteries 50, so that each battery 50 can be suppressed from increasing in temperature due to heat generation by being cooled by the battery cooling device 110.

Moreover, this battery attached with cooling device 100 allows the cooling oil OL to flow by use of the negative pressure of the intake pipe 11 generated by the intake air IG of the engine 10 and cools the cooling oil OL. This can provide a battery attached with cooling device of an energy-saving type needing no additional energy source to flow the cooling oil OL.

In this battery attached with cooling device 100, additionally, the batteries 50 are housed in the battery housing chamber 120 (the battery housing container 121) filled with the cooling oil OL. Even if the battery(s) 50 explodes in the battery housing chamber 120 by a pressure increase of the battery(s) 50, gas releasing from the battery(s) 50 and broken pieces of components of the battery(s) 50, etc. will stay in the battery housing chamber 120 without reaching the engine 10 along with the intake air IG. Accordingly, defects resulting from explosion of the battery(s) 50 such as troubles and damages of the engine 10 can be reliably avoided.

The vehicle 1 in the first embodiment is provided with the battery attached with cooling device 100 including the batteries 50 as well as the engine 10. When the engine 10 is operated, therefore, the batteries 50 can be cooled easily by the battery cooling device 110.

Consequently, this vehicle 1 can be realized as a vehicle that efficiently uses energy generated by operation of the engine 10 mounted with the batteries 50 having good battery characteristics.

### (Second Embodiment)

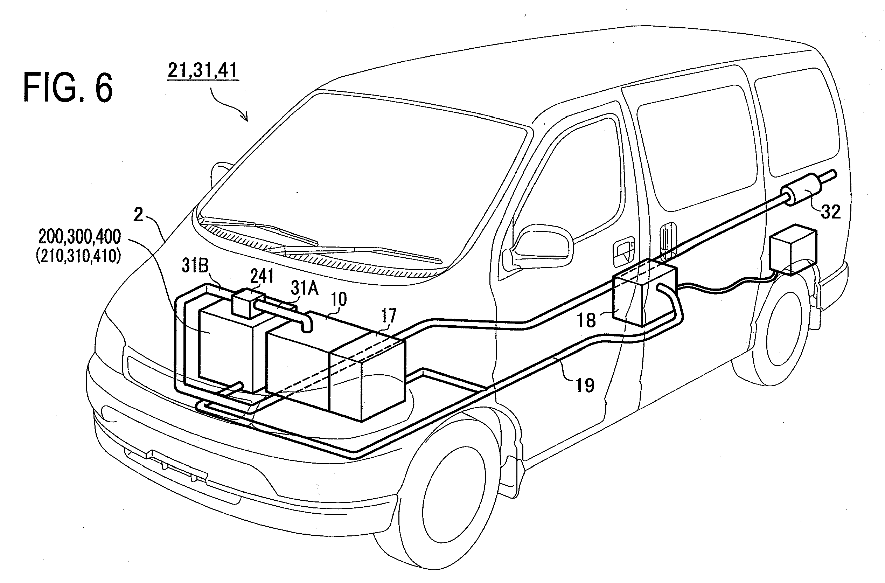

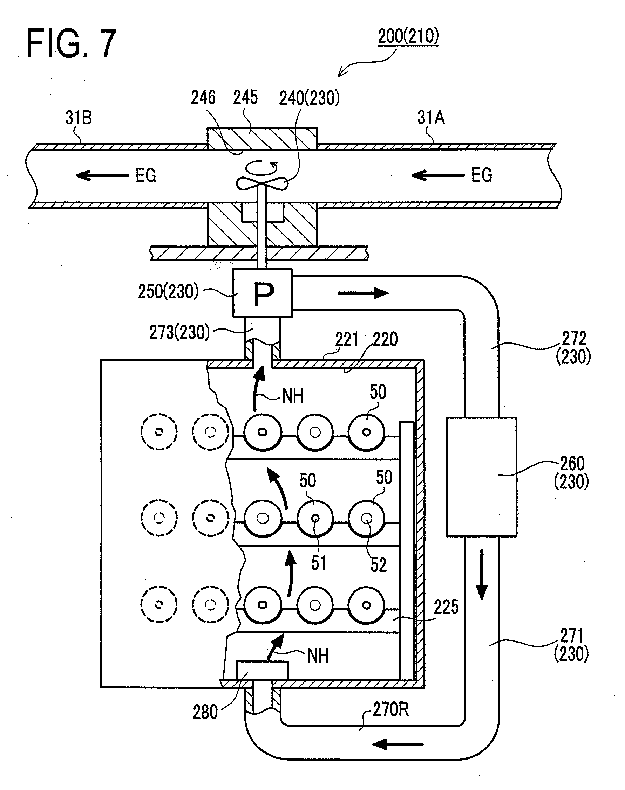

A second embodiment will be explained referring to FIGs. 6 and 7.

A battery attached with cooling device 200 in the second embodiment differs from the battery attached with cooling device 100 in the above first embodiment in regard to a structure of a refrigerant flowing part 230 (fluid flowing means) of a battery cooling device 210, the kinds of fluid, and a drive technique to flow the fluid; however, they are identical in the batteries 50 in addition to a vehicle 21 that is a hybrid car to be driven by a combination of the engine 10 and the motors 17 and 18. Therefore, the explanation will be focused on the different parts from the first embodiment and the identical parts are omitted or briefly explained.

The vehicle 21 in the second embodiment has the battery attached with cooling device 200 as shown in FIG. 6. This battery attached with cooling device 200 is mounted in the vehicle body 2 of the vehicle 21 and connected to the front motor 17 and the rear motor 18 through the cable 19. This battery attached with cooling device 200 includes the battery cooling device 210 (a cooling device of battery) mentioned later in detail and the plurality of batteries 50 (only fifteen batteries are illustrated in FIG. 7) housed in a battery housing chamber 220 formed by a battery housing container 221.

This vehicle 21 is configured to discharge exhaust gas EG (see FIGs. 6 and 7) from the engine 10 to the outside through an exhaust pipe 31A, an exhaust passage 246 in a turbine mounting part 245 of the battery cooling device 210, an exhaust pipe 31B and an exhaust device 32.

In this battery attached with cooling device 200, the batteries 50 are held with use of a battery holding member 225 placed in the battery housing chamber 220 so that the batteries 50 are arranged in a plurality of parallel rows (only three rows are illustrated in FIG. 7), each comprising more than one battery (only five batteries are illustrated in FIG. 7). Respective outer positive terminals 51 and outer negative terminals 52 of the adjacent batteries 50 are electrically connected in series by a bus bar (not shown).

The battery cooling device 210 of the battery attached with cooling device 200 will be explained below.

This battery cooling device 210 is placed in the vehicle body 22 of the vehicle 21 so that the exhaust pipe 31A and the exhaust pipe 31B are communicated with each other through an exhaust flow passage 246 of the turbine mounting part 245. This battery cooling device 210 uses ammonia NH (refrigerant) as a fluid and is provided with a refrigerant flowing part 230. This refrigerant flowing part 230 includes a battery housing container 221 forming the battery housing chamber 220, a turbine 240, a compressor 250 (a pump), a heat exchanger 260, pipes 271, 272, and 273, and others.

Of this refrigerant flowing part 230, the battery housing container 221 has internal space forming the battery housing chamber 220 having a sufficient size to house a plurality of batteries 50 (see FIG. 7). In this battery housing chamber 220, an evaporator 280 is provided to evaporate the liquefied ammonia NH. This battery housing chamber 220 is filled with the liquefied or vaporized ammonia NH.

Of the refrigerant flowing part 230, the turbine 240 is placed in the exhaust passage 246 of the turbine mounting part 245 and configured to rotate by the flow of exhaust gas EG flowing from the engine 10 toward the exhaust device 32 as shown in FIG. 7.

On the other hand, the compressor 250 is driven by rotation of the turbine 240 to feed gasified ammonia NH which is then liquefied by the heat exchanger 260 to the battery housing chamber 220. This heat exchanger 260 cools the vaporized ammonia NH in the battery housing chamber 220.

Of the refrigerant flowing part 230, the battery housing chamber 220 and the heat exchanger 260 are connected by a pipe 271, the heat exchanger 260 and the compressor 250 are connected by a pipe 272, and the compressor 250 and the battery housing chamber 220 are connected by a pipe 273, respectively. These pipes 271, 272, and 273 form a circulation passage 270R through which ammonia NH will circulate between the battery housing chamber 220, the compressor 250, and the heat exchanger 260. The ammonia NH is circulated through the circulation passage 270R by passing through the heat exchanger 260, being vaporized by the evaporator 280 to flow in the battery housing chamber 220, and flowing back toward the compressor 250.

When the engine 10 is operated, the exhaust gas EG will flow from the engine 10 to the exhaust pipes 31A and 31B and the exhaust passage 246. This flow of exhaust gas EG causes the turbine 240 to rotate. In association with this rotation of the turbine 240, the compressor 250 circulates the ammonia NH through the circulation passage 270R.

In the battery cooling device 210 in the second embodiment, the ammonia NH is circulated through the circulation passage 270R so that the batteries 50 housed in the battery housing chamber 220 are directly exposed to the ammonia NH. Thus, even when the batteries 50 generate heat, these batteries 50 can be cooled by the vaporized ammonia NH.

In this battery cooling device 210, furthermore, the batteries 50 are housed in the battery housing chamber 220 (the battery housing container 221) filled with ammonia NH. Accordingly, even when the battery(s) 50 explodes in the battery housing chamber 220 due to a pressure increase of the battery(s) 50, the gas releasing from the battery(s) 50 and broken pieces of components of the battery(s) 50, etc. will stay in the battery housing chamber 220 without reaching the exhaust device 32, an exhaust gas cleaning device (not shown), and others along with the exhaust gas EG. Together with the intake air, the above gas, broken pieces, and others will not reach the engine 10.

Consequently, defects resulting from explosion of the battery(s) 50 such as damages of the exhaust pipes 31A and 31B and the exhaust device 32 can be reliably avoided as well as troubles and damages of the engine 10.

### (First Modified Example)

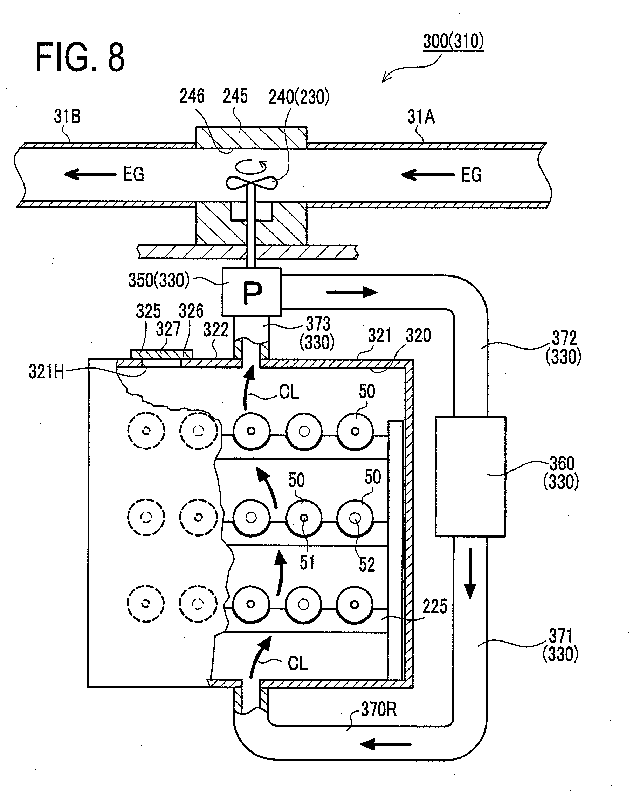

A first modified example will be explained below referring to FIGs. 6 and 8.

A battery cooling device 310 in this modified example differs from the battery cooling device 210 in the above second embodiment in relation to the type of fluid, part of a configuration of a battery housing container 321 and an addition of a gas vent valve 325 of a battery housing chamber 320 in the refrigerant flowing part 230 (the fluid flowing means). In the second embodiment, in the circulation passage 270R, the ammonia NH is compressed by the compressor 250 and cooled and liquefied by the heat exchanger 260, and vaporized by the evaporator 280, and then flowed into the battery housing chamber 220. On the other hand, the first modified example is different in a configuration that, in a circulation passage 370R, an antifreeze solution CL cooled through a heat exchanger 360 is flowed into the battery housing chamber 320 by a pump 350.

However, a drive technique of flowing the fluid by rotation of a turbine 240 induced by the exhaust gas EG and a structure that a vehicle 31 includes the engine 10 and the exhaust pipes 31A and 31B, and a structure of the batteries are identical to those of the second embodiment. Accordingly, the explanation will be focused on the different parts from the second embodiment.

In the battery attached with cooling device 300 in the first modified example, the plurality of batteries 50 mentioned in the first and second embodiments is housed in the battery housing chamber 320 of the battery cooling device 310. This battery cooling device 310 uses an antifreeze solution CL (liquid) as a fluid and includes an antifreeze solution flowing part 330. This antifreeze solution flowing part 330 includes a battery housing container 321 forming the battery housing chamber 320, the turbine 240, the pump 350, the heat exchanger 360, and pipes 371, 372, and 373. This battery cooling device 310 is mounted in the vehicle body 2 of the vehicle 31 as with the battery cooling device 210 of the above second embodiment so that the exhaust pipe 31A and the exhaust pipe 31B are communicated with each other through the exhaust passage 246 of the turbine mounting part 245.

Of the antifreeze solution flowing part 330, the battery housing container 321 has a cover wall 322 in an upper side in a vertical direction, the cover wall 322 including a valve hole 321H formed through the battery housing chamber 320 (see FIG. 8). The internal space of this battery housing container 321 forms the battery housing chamber 320 capable of housing the plurality of batteries 50 and is filled with the antifreeze solution CL.

This battery housing chamber 320 has a gas vent valve 325. This gas vent valve 325 is a plate shaped valve including an annular valve contact portion 326 that is positioned on an outer circumference and a valve function portion 327 that is positioned radially inside the valve contact portion 326 and has a one-way safety valve function. This gas vent valve 325 is arranged so that the valve contact portion 326 comes contact with a circumferential portion around the valve hole 321H of the cover wall 322 of the battery housing chamber 321 and the valve function portion 327 closes the valve hole 321H. If the battery(s) 50 explodes in the battery housing chamber 320, the gas releasing from the battery(s) 50 is released into the antifreeze solution CL and the inner pressure of the battery housing chamber 320 exceeds a predetermined value, the valve function portion 327 will be torn and opened by the gas pressure, thus allowing the gas to release from the battery housing chamber 320.

The pump 350 is driven by rotation of the turbine 240 to pressure feed the antifreeze solution CL to the battery housing chamber 320 via the heat exchanger 360. This heat exchanger 360 cools the antifreeze solution CL.

Of the antifreeze solution flowing part 330, the battery housing chamber 320 and the heat exchanger 360 are connected by a pipe 371, the heat exchanger 360 and the pump 350 are connected by a pipe 372, and the pump 350 and the battery housing chamber 320 are connected by a pipe 373, respectively. These pipes 371, 372, and 373 form the circulation passage 370R through which the antifreeze solution CL circulates between the battery housing chamber 320, the pump 350, and the heat exchanger 360.

When the engine 10 is operated, in the battery cooling device 310 in this first modified example, as with the battery cooling device 210 in the second embodiment, the exhaust gas EG similarly flows through the exhaust pipes 31A and 31B and the exhaust passage 246, and this exhaust gas EG rotates the turbine 240. In association with rotation of this turbine 240, the pump 350 circulates the antifreeze solution CL through the circulation passage 370R.

In the battery cooling device 310 in this first modified example, the antifreeze solution is circulated through the circulation passage 370R so that the batteries 50 housed in the battery housing chamber 320 are directly exposed to the antifreeze solution CL. Accordingly, even when the batteries 50 generate heat, these batteries 50 can be cooled by the antifreeze solution CL.

In this battery cooling device 310, furthermore, the batteries 50 are housed in the battery housing chamber 320 (the battery housing container 321) filled with the antifreeze solution CL and provided with the gas vent valve 325. Even if the battery(s) 50 explodes in the battery housing chamber 320 due to a pressure increase of the battery(s) 50, the gas releasing from the battery(s) 50 can be discharged through the antifreeze solution CL filled in the battery housing chamber 320 to the outside of the battery housing chamber 320 through the gas vent valve 325. Accordingly, broken pieces of components of the battery(s) 50, etc. caused by the explosion will stay in the battery housing chamber 320. The above gas can be discharged out of the battery housing chamber 320. They will not reach the exhaust device 32, an exhaust gas cleaning device (not shown), and others along with the exhaust gas EG. Furthermore, the above gas and broken pieces will not reach the engine 10 along with the intake air.

Consequently, defects resulting from explosion of the battery(s) 50 such as damages of the exhaust pipes 31A and 31B and the exhaust device 32 can be reliably avoided as well as troubles and damages of the engine 10.

It is further possible to prevent defects of the pump 350 and the heat exchanger 360 caused by an increase of the inner pressure in the circulation passage 370R resulting from the above released gas, and to prevent breakage and the like of the battery housing chamber 320 and the pipes 371, 372, and 373, and others.

### (Third Embodiment)

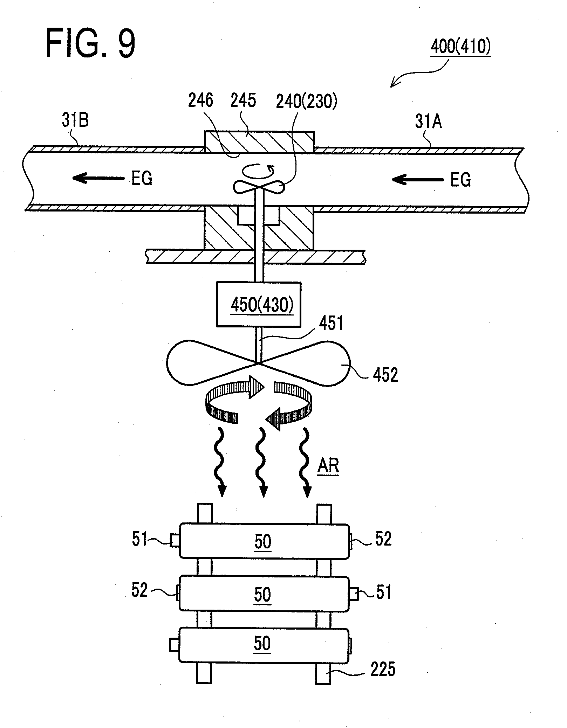

A third embodiment will be explained below referring to FIGs. 6 and 9.

A battery attached with cooling device 400 in the third embodiment includes a battery cooling device 410 in addition to the plurality of batteries 50 in the above first embodiment.

The battery cooling device 410 in the third embodiment differs from the battery cooling devices 110, 210, 310, and other in the above first and second embodiment and the first modified example in terms of the type of fluid and a configuration of an outside air flowing part 430 (the fluid flowing means). However, the drive technique of flowing the fluid by rotation of the turbine 240 induced by the exhaust gas EG, the structure of the vehicle 41, and the configuration of the batteries 50 are the same as those in the battery cooling devices 210 and 310 of the second embodiment and the first modified example. Accordingly, the following explanation will be focused on the different parts from the first and second embodiments and the first modified example.

The battery cooling device 410 in the third embodiment uses outside air AR as a fluid and includes the outside-air flowing part 430 (the fluid flowing means). This outside-air flowing part 430 is constituted of the turbine 240 and a fan 450 for blowing the outside air AR. This battery cooling device 410 is also mounted in the vehicle body 2 of the vehicle 41 as with the battery cooling devices 210 and 310 in the above second embodiment and first modified example so that the exhaust pipe 31A and the exhaust pipe 31B are communicated with each other through the exhaust passage 246 of the turbine mounting part 245.

In the battery cooling device 410, the batteries 50 are held with use of a battery holding member 225 placed outside the exhaust pipes 31A and 31B and the exhaust passage 246 so that the batteries are arranged in a plurality of parallel rows (only three rows are illustrated in FIG. 9), each comprising more than one battery (only one battery is illustrated in FIG. 9).

The fan 450 includes a rotation shaft 451 which is driven to rotate by rotation of the turbine 240 and a bladed wheel 452 which rotates together with this rotation shaft 451. By rotation of the bladed wheel 452, the fan 450 can blow the outside air AR. This fan 450 is placed in a position to allow the blown outside air AR to directly contact the batteries 50.

When the engine 10 is operated, in the battery cooling device 410 in the second embodiment, the exhaust gas EG similarly flows through the exhaust pipes 31A and 31B and the exhaust passage 246, and this exhaust gas EG rotates the turbine 240. In association with rotation of this turbine 240, the bladed wheel 452 of the fan 450 is rotated to blow the outside air AR toward the batteries 50.

Accordingly, even when the batteries 50 generate heat, the batteries 50 can be cooled by the outside air AR blown by the fan 450 induced by rotation of the turbine 240 during operation of the engine 10.

Although the present invention is explained in the above first to third embodiments and first modified example, the present invention is not limited to the above embodiments and modified example and may be embodied in other specific forms without departing from the essential characteristics thereof.

For instance, the cooling oil OL is used as liquid in the battery cooling device 110 in the first embodiment. Instead thereof, the types of liquid to be used in a battery cooling device may include pure water, antifreeze solution, and others.

The ammonia NH is used as a refrigerant in the battery cooling device 210 in the second embodiment. Instead thereof, the type of the refrigerant to be used in the battery cooling device may include other refrigerants such as isobutane and HFC, for example.

In the second and third embodiments and first modified example, the fluid (ammonia NH, antifreeze solution CL, and outside air AR) is flowed by rotation of the turbine 240 by the exhaust gas EG. Alternatively, the turbine (the fluid flowing means) in the second and third embodiments and first modified example may be rotated by intake air to flow the fluid (ammonia NH, antifreeze solution CL, and outside air AR).

In the first to third embodiments and first modified example, a cylindrical lithium ion secondary battery is exemplified as the battery 50. However, the type and the form of the battery and the number of batteries to be mounted in a vehicle may be changed appropriately.

In the first to third embodiments and first modified example, a 4-wheel hybrid car is exemplified as the vehicles 1, 21, and others. As an alternative, it may be applied to a vehicle mounted with an engine and a battery(s) such as a motorbike, a fork lift, and a railroad vehicle.

## Claims

1. A battery cooling device, comprising:
a fluid different from intake air and exhaust gas of an engine, the fluid being to come into direct or indirect contact with a battery; and
fluid flowing means for flowing the fluid by using the intake air or exhaust gas of the engine as a power source.

2. The battery cooling device according to claim 1, wherein
the fluid is a liquid,
the cooling device comprises a battery housing chamber housing the battery, the battery housing chamber being filled with the liquid,
the fluid flowing means comprises:
a bubble rising pipe extending in a vertical direction and containing the liquid, the bubble rising pipe having an upper end to be communicated with an intake pipe through which the intake air of the engine will flow and a bubble inlet hole for introducing outside air to generate bubbles in the contained liquid; and
an outside-air inlet pipe communicated with the bubble rising pipe and configured to introduce outside air into the bubble inlet hole by negative pressure of the intake pipe through the bubble rising pipe,
the bubble rising pipe is communicated with the battery housing chamber through a first flow hole and a second flow hole, the first flow hole being located above the bubble inlet hole in the vertical direction and being configured to allow the liquid to flow at least from the battery housing chamber toward the bubble rising pipe, and the second flow hole being located above the first flow hole in the vertical direction and being configured to allow the fluid to flow at least from the bubble rising pipe toward the battery housing chamber,
the fluid flowing means is arranged to flow the liquid from the battery housing chamber toward the bubble rising pipe through the first flow hole and flow the liquid from the bubble rising pipe toward the battery housing chamber through the second flow hole by a liquid flow to be induced in the liquid when bubbles introduced in the bubble rising pipe through the bubble inlet hole by the negative pressure of the intake pipe move upward in the bubble rising pipe.

3. The battery cooling device according to claim 1, wherein
the fluid is a refrigerant,
the fluid flowing means comprises:
a turbine to be rotated by a flow of the intake air or the exhaust gas of the engine; and
a pump for pressure feeding the refrigerant by rotation of the turbine;
the battery cooling device comprises:
a battery housing chamber capable of housing the battery, the battery housing chamber being filled with the refrigerant;
a heat exchanger for cooling the refrigerant; and
a pipe connecting between the battery housing chamber and the heat exchanger, between the heat exchanger and the pump, and between the pump and the battery housing chamber, the pipe being arranged to form a circulation passage for circulating the refrigerant between the battery housing chamber, the heat exchanger, and the pump.

4. The battery cooling device according to claim 3, wherein
the fluid is a liquid, and
the battery housing chamber has a gas vent valve for discharging gas releasing from the battery to the outside.

5. The battery cooling device according to claim 1, wherein
the fluid is outside air, and
the fluid flowing means includes:
a turbine to be rotated by a flow of the intake air or the exhaust gas of the engine; and
a fan which is operated by rotation of the turbine to blow the outside air to cool the battery.

6. A battery attached with cooling device comprising:
the battery; and
the battery cooling device set forth in one of claims 1 to 5.

7. A vehicle comprises:
an engine;
the battery; and
the battery cooling device set forth in one of claims 1 to 5.
